# EUROPÄISCHE PATENTANMELDUNG

(11) **EP 0 924 459 A1**
(43) Veröffentlichungstag der Anmeldung: **23.06.1999**
(21) Anmeldenummer: 97810994.0
(22) Anmeldetag: 17.12.1997
(51) Int. Cl.: F23D 11/16, F02C 3/30

(54) **Verfahren und Vorrichtung zum Eindüsen eines Brennstoff-Flüssigkeitsgemisches in die Brennkammer eines Brenners**

(71) Anmelder: Asea Brown Boveri AG, 5401 Baden (CH)
(72) Erfinder: Keller, Jakob, Prof. Dr., 5610 Wohlen (CH)

(57) **Zusammenfassung**

Beschrieben wird ein Verfahren sowie eine Vorrichtung zum Eindüsen eines Brennstoff-Flüssigkeitsgemisches in die Brennkammer eines Brenners mit einer Zerstäuberdüse, mit wenigstens einen Zuleitungsbereich die Flüssigkeit und wenigstens einen davon getrennten Zuleitungsbereich für den Brennstoff und wenigstens einen Volumenbereich, der vor der Zerstäuberdüsenöffnung vorgesehen ist, in dem die Flüssigkeit mit dem Brennstoff gemischt wird.
Die Erfindung zeichnet sich dadurch aus, daß die Flüssigkeit vor oder während der Vermischung mit dem Brennstoff eine Wirbelbildung erfährt.

## Beschreibung

### Technisches Gebiet

Die Erfindung bezieht sich auf ein Verfahren sowie eine Vorrichtung zum Eindüsen eines Brennstoff-Flüssigkeitsgemisches in die Brennkammer eines Brenners mit einer Zerstäuberdüse, mit wenigstens einen Zuleitungsbereich für die Flüssigkeit und wenigstens einen davon getrennten Zuleitungsbereich für den Brennstoff und wenigstens einen Volumenbereich, der vor der Zerstäuberdüsenöffnung vorgesehen ist, in dem die Flüssigkeit mit dem Brennstoff gemischt wird.

### Stand der Technik

Die Befeuerung von Brennkammern, die zur Energiegewinnung verwendet werden und insbesondere in Kombination mit nachgeschalteten Gasturbinenanlagen die Umwandlung von fossilen Brennstoffen in elektrische Energie ermöglichen, unterliegt dem ständigen Bestreben, den Verbrennungsvorgang hinsichtlich der vollständigen Verbrennung eingesetzter Brennstoffe sowie der Reduzierung der durch die Verbrennung entstehenden Emissionen zu optimieren.

So führt beispielsweise eine unvollständige Verbrennung der in die Brennkammer eingebrachten Brennstoffe zu erhöhten NOx-Emissionswerten, die durch eine Beimischung des Brennstoffes mit Wasser entscheidend verringert werden können.

Beim Betrieb von Gasturbinenanlagen, deren Brenner zur Vermeidung erhöhter NOx-Emissionswerte mit einem Brennstoff-Wassergemisch betrieben wird, zeigt sich, daß sich innerhalb der Brennereinheit intensive, niederfrequente Schwingungen einstellen, deren Schwingungsamplitude mit zunehmendem Wasseranteil im Brennstoff-Wassergemisch ansteigt. Je nach Größe und Form der Brennereinheit bilden sich mehrere diskrete Resonanzschwingungen bei unterschiedlichen Frequenzen aus.

Ursache für die derart stark ausgebildeten Schwingungserscheinungen mit niedrigen Frequenzen scheinen mit großer Sicherheit Beugungseffekte von Entropiewellen an dem, der Brennkammer in Strömungsrichtung nachgeschalteten Turbineneinlaß zu sein. Entropiewellen treten vornehmlich dann auf, falls das Temperaturverhältnis über die gesamte Flamme innerhalb der Brennkammer deutlich größer als 2 ist. Aus diesem Grunde stellen sich häufig zwischen dem Zündereignis und dem Leerlaufbetrieb des Brenners derartige Schwingungen ein, zumal die in die Brennkammer einströmende Luft von verhältnismäßig geringer Temperatur im Vergleich zur Flammtemperatur ist, so daß das Temperaturverhältnis über die gesamte Flamme sehr groß ist.

Zur Unterdrückung der sich ausbildenden niederfrequenten Schwingungen könnten gezielte Modifikationen an der Brennkammer sowie deren Verbindung zur Turbineneinlaßöffnung vorgenommen werden, durch die das Resonanzverhalten dieses Volumenbereiches verändert und entsprechend abgestimmt werden kann. Beispielsweise böten sich hierfür das Vorsehen geeigneter Bypassleitungen im Brennkammer- oder auch im Hochdruckturbinenbereich an, durch die eine gezielte Schwingungsdämpfung erreicht werden könnte. Derartige Modifikationen würden jedoch aufwendige Umbaumaßnahmen bei bereits bestehenden Gasturbinenanlagen erfordern, die jedoch durch den damit verbundenen hohen Kostenaufwand sowie einen länger dauernden Betriebsausfall der Anlage unattraktiv sind.

### Darstellung der Erfindung

Der Erfindung liegt die Aufgabe zugrunde, ein Verfahren sowie eine Vorrichtung zum Eindüsen eines Brennstoff-Flüssigkeitsgemisches in die Brennkammer eines Brenners mit einer Zerstäuberdüse, derart weiterzubilden, daß das Auftreten niederfrequenter intensiver Schwingungen innerhalb der Brennkammer weitgehend beseitigt werden können, ohne dabei kostenintensive Umbaumaßnahmen an bestehenden Anlagenkomponenten, insbesondere bei fertiggestellten Gasturbinenanlagen, zu bedingen.

Die Lösung der der Erfindung zugrundeliegenden Aufgabe ist im Anspruch 1 angegeben, das ein erfindungsgemäßes Verfahren beschreibt. Anspruch 4 zielt auf eine erfindungsgemäße Vorrichtung sowie Anspruch 15 auf eine erfindungsgemäße Verwendung der Vorrichtung ab. Den Erfindungsgedanken vorteilhaft weiterbildende Merkmale sind Gegenstand der Unteransprüche.

Der Erfindung liegt die Erkenntnis zugrunde, daß die durch die Ausbildung von Entropiewellen innerhalb der Brennkammer hervorgerufenen niederfrequenten Schwingungen in ihrem Resonanzverhalten wesentlich von einer Zeitdauer ↖ mitbestimmt wird, die dem Zeitintervall zwischen dem Austritt des Brennstoff-Flüssigkeitsgemisches aus der Zerstäuberdüse und dem Zündereignis innerhalb der Brennkammer entspricht.

Untersuchungen an einem Modellaufbau eines Brenners, der vor Eintritt in die Brennkammer eine für die Zufuhr eines Brennstoff-Flüssigkeitsgemisches geeignete Zerstäuberdüse vorsieht und dessen Resonanzverhalten mit Hilfe eines den Brenner in Schwingungen versetzenden Lautsprechersystems vermessen wurde, haben gezeigt, daß sich in Abhängigkeit der akustischen Rahmenbedingungen, die sich insbesondere durch die Geometrie der Brennerform und des Brennervolumens ergeben, bestimmte Resonanzfrequenzen ausbilden, von denen eine in etwa der Helmholtz Resonanzfrequenz des akustischen Systems entsprach. Messungen bezüglich der von dem Brennersystem absorbierten Schallenergie, die das Lautsprechersystem zur Verfügung stellte, haben ergeben, daß das Brennersystem bei resonantem Schwingungsverhalten die eingekoppelte Schallenergie am stärksten absorbiert, sofern ↖ sehr kleine Werte, nahe Null, oder Werte nahe dem Reziprokwert der entsprechenden Resonanzfrequenz annimmt. Mit anderen Worten, ist man durch entsprechende Wahl der Zeitdauer ↖ in der Lage, die Moden der Entropiewellen besonders stark anzuregen. Im Umkehrschluß bedeutet dies ebenso, daß durch geeignete Wahl des Parameters ↖ eine Größe gefunden wurde, durch deren geeignete Wahl Betriebszustände eines Brenners eingestellt werden können, in denen die Anregung von Entropiewellen, die ursächlich für die Ausbildung der niederfrequenten Schwingungen sind, weitgehend unterdnückt werden können. Somit spielt der Parameter ↖, der die Zeitdauer zwischen Brennstoff-Wassergemischeinspritzung sowie Verbrennungsereignis angibt, eine entscheidende Rolle bei der Unterdrückung der niederfrequenten Schwingungen.

Weitere Untersuchungen haben ergeben, daß bei steigendem Flüssigkeitsanteil, der dem Brennstoff beigemischt wird, die Zeitdauer ↖ ansteigt. Um jedoch die Zeitspanne ↖ trotz der bestehenden Abhängigkeit von der Menge der dem Brennstoff beigemischten Flüssigkeit auf geeignete Werte einstellen zu können, bei denen eine Schwingungsanregung des gesamten Brennersystems möglichst unterdrückt werden kann, wurde erfindungsgemäß erkannt, daß durch gezielte Verwirbelung der dem Brennstoff beizumischenden Flüssigkeit, im vorstehenden Falle von Wasser, die Zeitdauer ↖ verkürzt werden kann, so daß durch gesteuertes Einbringen von Wirbeln in den Flüssigkeitszustrom vor oder während der Vermischung mit dem Brennstoff die Zeitdauer ↖ weitgehend beliebig und unabhängig vom Flüssigkeitsanteil innerhalb des Brennstoff-Flüssigkeitsgemisches eingestellt werden kann.

Erfindungsgemäß ist ein Verfahren zum Eindüsen eines Brennstoff-Flüssigkeitsgemisches in die Brennkammer eines Brenners mit einer Zerstäuberdüse, mit wenigstens einen Zuleitungsbereich für die Flüssigkeit und wenigstens einen davon getrennten Zuleitungsbereich für den Brennstoff und wenigstens einem Volumenbereich, der vor der Zerstäuberdüsenöffnung vorgesehen ist, in dem die Flüssigkeit mit dem Brennstoff gemischt wird, derart ausgebildet, daß die Flüssigkeit vor oder während der Vermischung mit dem Brennstoff eine Verwirbelung erfährt.

Da, wie vorstehend erwähnt, die Zeitdauer ↖ mit zunehmendem Flüssigkeitsanteil im Brennstoff-Flüssigkeitsgemisch zunimmt, ist man durch erhöhte Wirbelbildung im Flüssigkeitszustrom in der Lage, die Zunahme von ↖ zu kompensieren. Durch entsprechende Einprägung von Wirbeln in den Flüssigkeitszustrom respektive in die mit dem Brennstoff zu vermischende Flüssigkeitsströmung kann der Zündzeitpunkt bzw. die Zeitdauer ↖ in Abhängigkeit des beizumischenden Flüssigkeitsanteils individuell eingestellt werden, so daß die Ausbildung von Entropiewellen möglichst unterbunden werden kann.

Eine erfindungsgemäße Vorrichtung zum Eindüsen eines Brennstoff-Flüssigkeitsgemisches in die Brennkammer eines Brenners mit einer Zerstäuberdüse, zur Durchführung des obenstehend genannten erfindungsgemäßen Verfahrens ist dadurch ausgebildet, daß in wenigstens einem Zuleitungsbereich für die Flüssigkeit ein Wirbel erzeugendes Element vorgesehen ist oder der Zuleitungsbereich für die Flüssigkeit derart angeordnet ist, daß die Flüssigkeitsströmung vor oder während der Vermischung mit dem Brennstoff verwirbelt wird.

Der Grad der Verwirbelung kann durch entsprechende konstruktive Maßnahmen innerhalb des Zuleitungsbereiches für die Flüssigkeit, beispielsweise durch die Steigung von Umlenkblechen relativ zur Strömungsrichtung der Flüssigkeit oder durch entsprechend angebrachte Durchgangsöffnungen zwischen dem Zuleitungsbereich für die Flüssigkeit und dem Zuleitungsbereich für den Brennstoff eingestellt werden.

An sich bekannte Zerstäuberdüsen verfügen axial zur Düsenauslaßöffnung für den zu zerstäubenden Brennstoff über einen Zuleitungsbereich. Nach Durchtritt des Brennstoffes, vorzugsweise Heizöl, aus der Düsenöffnung wird dieser in feinste Brennstofftröpfchen zerstäubt. Die erfindungsgemäße Vorrichtung sieht vor Austritt des Brennstoffes aus der Düsenauslaßöffnung vor, daß dem Brennstoff Flüssigkeit, vorzugsweise Wasser, beigemischt wird, das in verwirbelter Form mit dem Brennstoff vor Austritt aus der Düsenauslaßöffnung vermengt wird.

Besonders geeignet sind hierzu Durchtrittsöffnungen zwischen dem Zuleitungsbereich für die Flüssigkeit und dem Zuleitungsbereich für den Brennstoff, durch die die Flüssigkeit senkrecht zum Strömungsfluß des Brennstoffes eingeleitet wird. Auf diese Weise gerät die in den Brennstoff-Fluß einmündende Flüssigkeit in einen annähernd spiralförmig sich ausbreitenden Wirbel, durch den die Flüssigkeit mit dem Brennstoff vermischt wird.

Eine alternative Düsenanordnung sieht vor, daß getrennt durch eine Zwischenwand um den axial zur Düsenaustrittsöffnung gerichteten Brennstoff-Fluß eine koaxiale Flüssigkeitsströmung vorgesehen ist, die durch Wirbel erzeugende Elemente innerhalb des Zuleitungsbereichs für die Flüssigkeit die Flüssigkeitsströmung in einen koaxial um den Zuleitungsbereich des Brennstoffes rotierenden Wirbel versetzt. Kurz vor der Zerstäuberdüsenauslaßöffnung stoßen beide Strömungen zusammen und gelangen in verwirbelter Form zur Düsenauslaßöffnung.

In Abhängigkeit vom Anteil der dem Brennstoff beizumischenden Flüssigkeit ist die Wirbelstärke innerhalb der Flüssigkeitsströmung entsprechend vorzugeben.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Brennerdarstellung für 3 unterschiedliche Fallkonstellationen:
a: Zerstäubung reinen Brennstoffs,
b: Zerstäubung eines Brennstoff-Flüssigkeitsgemisches mit geringem Flüssigkeitsanteil sowie
c: Zerstäubung eines Brennstoff-Flüssigkeitsgemisches mit hohem Flüssigkeitsanteil,
- Fig. 2: Zerstäuberdüse mit Durchgangsöffnungen,
- Fig. 3: Zerstäuberdüse mit Wirbel erzeugenden Elementen innerhalb des Zuleitungsbereiches für die Flüssigkeit, sowie
- Fig. 4 a, b: Querschnittsdarstellung durch Zerstäuberdüse mit senkrechten Zuleitungsbereichen für Brennstoff und Flüssigkeit relativ zur Düsenauslaßöffnung.

### Wege zur Ausführung der Erfindung, gewerbliche Verwendbarkeit

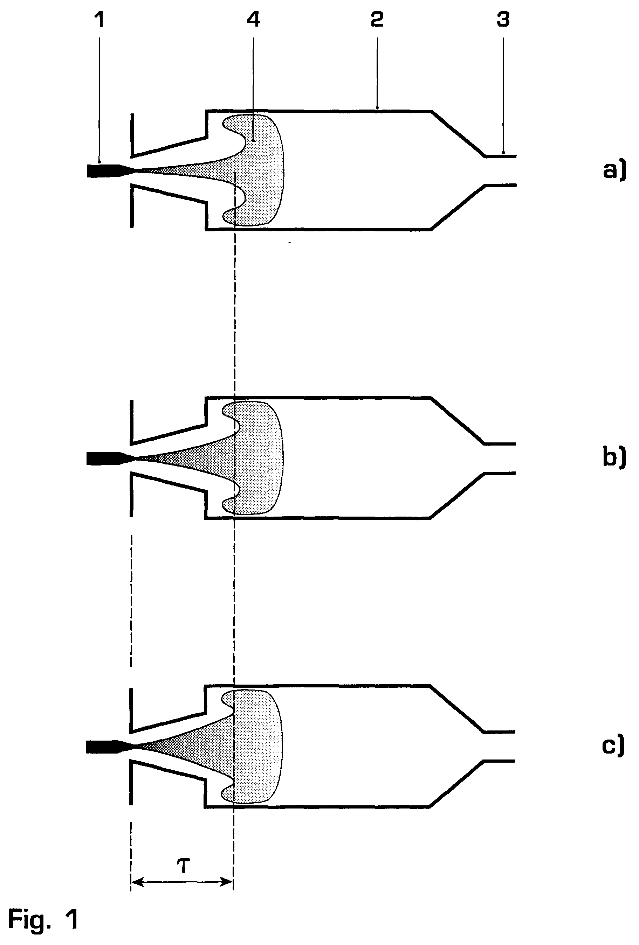

In den Fig. 1a bis c ist ein schematisierter Querschnitt durch ein Brennersystem dargestellt, das jeweils aus einer Zerstäuberdüse 1, einer Brennkammer 2 sowie einem Verbindungsbereich 3 für eine der Brennkammer 2 nachfolgenden - nicht dargestellten - Gasturbine besteht. Im Falle von Fig. 1a ist dargestellt, daß aus der Zerstäuberdüse 1 ausschließlich Brennstoff zerstäubt wird, der in einem bestimmten zeitlichen Abstand ↖ gezündet wird und innerhalb der Brennkammer 2 die stilisiert dargestellte Verbrennungsflamme 4 bildet.

In Fig. 1b ist der Fall dargestellt, daß ein geringer Flüssigkeitsanteil dem Brennstoff noch vor Austritt aus der Zerstäuberdüse 1 beigemischt ist. Ohne die erfindungsgemäße Vorkehrung, nämlich den Flüssigkeitsstrom in verwirbelter Form dem Brennstoff beizumischen, würde der zeitliche Abstand ↖ zwischen Zerstäuberdüse und Verbrennungsflamme größer werden, wie eingangs beschrieben, doch kann die Zeitspanne ↖ durch entsprechende Wirbeleinprägung innerhalb der dem Brennstoff beizumischenden Flüssigkeit, wie im Falle gemäß Fig. 1a, beibehalten werden.

Um ↖ auch im Falle größerer Mengen an Flüssigkeit, die dem Brennstoff innerhalb der Zerstäuberdüse 1 beigemischt werden, konstant zu halten, muß die dem Brennstoff beizumischende Flüssigkeit stärker verwirbelt werden. Durch diese Maßnahmen kann das Schwingungsverhalten des Brenners trotz Beimischung des Brennstoffes mit Flüssigkeit wie im Falle der bloßen Brennstoffverbrennung gemäß Fig. 1a aufrechterhalten werden, indem je nach Flüssigkeitsanteil die dem Brennstoff beizumengende Flüssigkeit in entsprechend starker Weise verwirbelt wird.

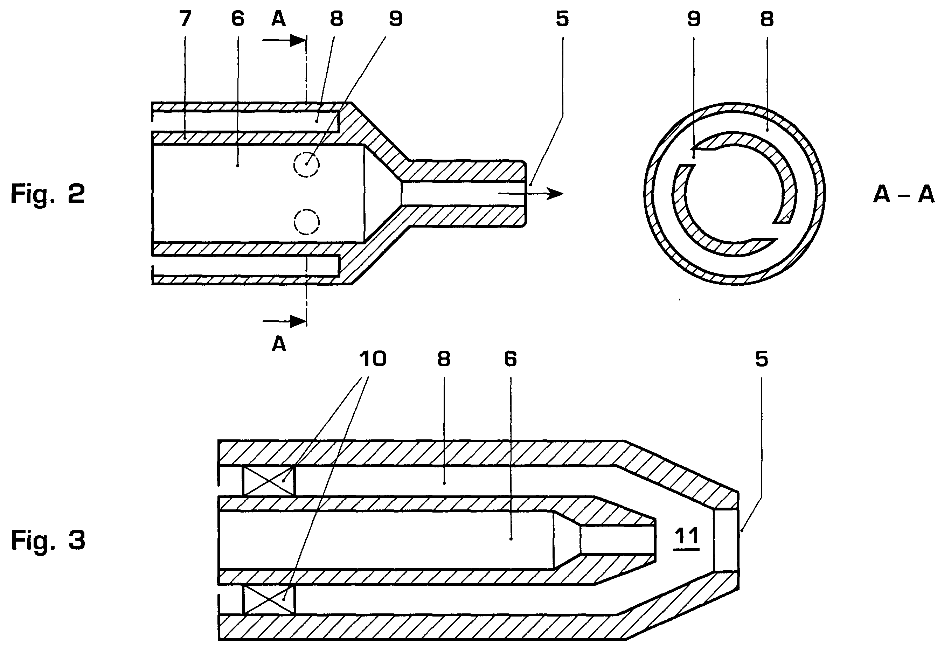

In Fig. 2 ist eine vorteilhafte Ausführungsform einer Zerstäuberdüse im Längsschnitt (linke Darstellung) dargestellt. Axial zur Düsenauslaßöffnung 5 ist der Zuleitungsbereich 6 für den Brennstoff vorgesehen. Optional kann dem Brennstoff innerhalb des Zuleitungsbereiches 6 für den Brennstoff bereits Flüssigkeit in Form von Wasser beigemischt sein. Getrennt durch eine Zwischenwand 7 ist ein Zuleitungsbereich 8 für Wasser vorgesehen, der koaxial um den Zuleitungsbereich 6 für den Brennstoff angeordnet ist. Wie aus der Querschnittsdarstellung (rechte Darstellung) zu entnehmen ist, sind in der Zwischenwand 7 zwei gegenüberliegende Durchgangsöffnungen 9 eingebracht, die derart die Zwischenwand 7 durchdringen, daß die Flüssigkeit weitgehend tangential an die Innenwand des Zuleitungsbereiches 6 für den Brennstoff einströmt. Auf diese Weise bilden sich im Zuleitungsbereich 6 für den Brennstoff Flüssigkeitswirbel innerhalb des Brennstoffes und treten nachfolgend als Brennstoff-Flüssigkeitsgemisch aus der Düsenauslaßöffnung 5 aus.

Die Wirbelbildung bzw. Drallwirkung der in den Brennstoff eintretenden Flüssigkeit wird im dem Ausführungsbeispiel gemäß Fig. 2 durch die Form und Anordnung der Durchgangsöffnungen 9 innerhalb der Zwischenwand 7 erzeugt. Es handelt sich hierbei um zwei Bohrungen, deren Bohrungsachsen weitgehend parallel verlaufen.

Wichtig dabei ist, daß die durch die Bohrungen in den Zuleitungsbereich für den Brennstoff eintretende Flüssigkeit zunächst in gleicher Strömungsrichtung an der Innenwand des Zuleitungsbereiches senkrecht zur Strömungsrichtung des Brennstoffes anliegt.

In Fig. 3 ist eine weitere Möglichkeit zur Vermischung von Brennstoff und Flüssigkeit unter Wirbelbildung dargestellt, bei der der axial zur Düsenauslaßöffnung 5 verlaufende Zuleitungsbereich für den Brennstoff von einem koaxialen Zuleitungsbereich 8 für die Flüssigkeit umgeben ist. Im Zuleitungsbereich für die Flüssigkeit 8 ist ein Wirbel erzeugendes Element 10 vorgesehen, das die Flüssigkeitsströmung in Rotationsbewegung um den mittig angeordneten Zuleitungsbereich für den Brennstoff versetzt. Kurz vor der Düsenauslaßöffnung 5 ist ein Mischvolumen 11 vorgesehen, in dem die Flüssigkeit und der Brennstoff miteinander vermischt werden.

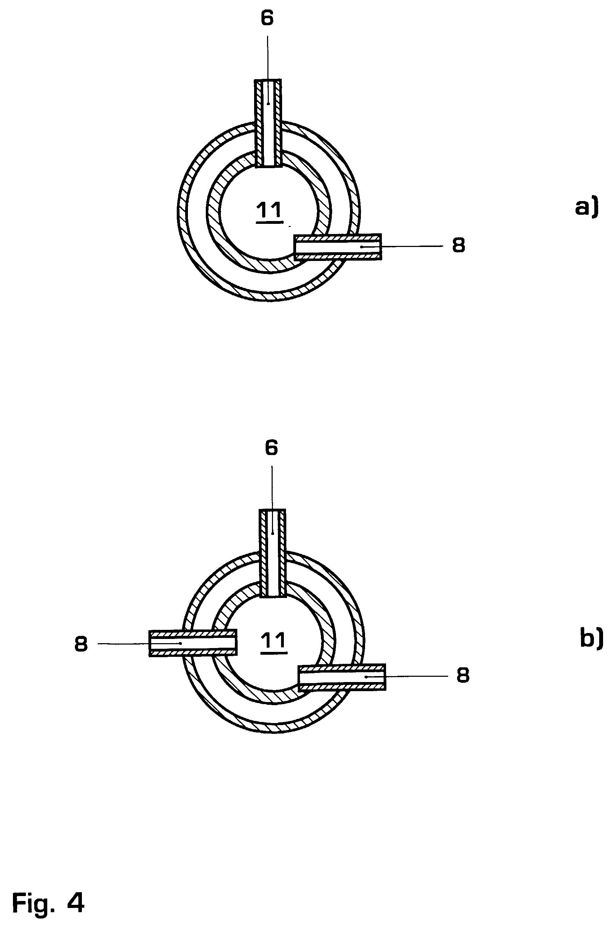

In Fig. 4a und 4b sind alternative Querschnittsdarstellungen durch eine Zerstäuberdüse 1 gezeigt.

In Fig. 4a tritt senkrecht in ein Mischvolumen 11 Brennstoff über einen Zuleitungskanal 6 ein. Ein Zuleitungskanal 8, über den Flüssigkeit in das Mischvolumen 11 eintritt, ist dabei derart angeordnet, daß die Flüssigkeit bei Eintritt in das Mischvolumen tangential zur Innenwand des Mischvolumens gerichtet ist. Auf diese Weise erfährt die an der Innenwand des Mischvolumens 11 anliegende Flüssigkeit durch die kreisrunde Kontur der Innenwand eine Wirbelbildung, mit der sie sich mit dem Brennstoff vermengt.

Je nach Flüssigkeitsanteil können in dem Mischvolumen 11 mehrere Zuleitungskanäle für Flüssigkeit vorgesehen werden. In Fig. 4b sind zwei Zuleitungskanäle für Flüssigkeit und ein Zuleitungskanal für Brennstoff vorgesehen. Durch die entsprechende Einstellung der Einströmgeschwindigkeiten, mit der die Flüssigkeit in das Mischvolumen 11 gemäß Fig. 4b einströmt, ist es möglich, den Grad der Verwirbelung innerhalb des Mischvolumens 11 einzustellen.

### Bezugszeichenliste

- 1: Zerstäuberdüse
- 2: Brennkammer
- 3: Verbindungsbereich
- 4: Verbrennungsflamme
- 5: Düsenauslaßöffnung
- 6: Zuleitungsbereich für Brennstoff
- 7: Zwischenwand
- 8: Zuleitungsbereich für Wasser
- 9: Durchgangsöffnung
- 10: Wirbel erzeugendes Element
- 11: Mischvolumen

## Patentansprüche

1. Verfahren zum Eindüsen eines Brennstoff-Flüssigkeitsgemisches in die Brennkammer (2) eines Brenners mit einer Zerstäuberdüse (1), mit wenigstens einem Zuleitungsbereich (8) für die Flüssigkeit und wenigstens einem davon getrennten Zuleitungsbereich (6) für den Brennstoff und wenigstens einem Volumenbereich (11), der vor der Zerstäuberdüsenöffnung (5) vorgesehen ist, in dem die Flüssigkeit mit dem Brennstoff gemischt wird, dadurch gekennzeichnet, daß die Flüssigkeit vor oder während der Vermischung mit dem Brennstoff eine Wirbelbildung erfährt.

2. Verfahren nach Anspruch 1, dadurch gekennzeichnet, daß als dem Brennstoff beizumischende Flüssigkeit Wasser verwendet wird.

3. Verfahren nach Anspruch 1 oder 2, dadurch gekennzeichnet, daß die Wirbelbildung derart erfolgt, daß je größer der Flüssigkeitsanteil beim Durchtritt durch die Zerstäuberdüse (1) wird, umso stärker die Flüssigkeit verwirbelt wird.

4. Vorrichtung zum Eindüsen eines Brennstoff-Flüssigkeitsgemisches in die Brennkammer (2) eines Brenners mit einer Zerstäuberdüse (1), die wenigstens einen Zuleitungsbereich (8) für die Flüssigkeit und wenigstens einen davon getrennten Zuleitungsbereich (6) für den Brennstoff vorsieht, mit wenigstens einen Volumenbereich (11), der vor der Zerstäuberdüsenöffnung (5) vorgesehen ist, in dem die Flüssigkeit mit dem Brennstoff mischbar ist, dadurch gekennzeichnet, daß in wenigstens einem Zuleitungsbereich (8) für die Flüssigkeit ein wirbelerzeugendes Element (10) vorgesehen ist oder der Zuleitungsbereich (8) für die Flüssigkeit derart angeordnet ist, daß die Flüssigkeitsströmung vor oder während der Vermischung mit dem Brennstoff verwirbelt wird.

5. Vorrichtung nach Anspruch 4, dadurch gekennzeichnet, daß axial zur Zerstäuberdüsenöffnung (5) der Zuleitungsbereich (6) für den Brennstoff vorgesehen ist, der koaxial von einem Zuleitungsbereich (8) für die Flüssigkeit umgeben ist, daß zwischen beiden Zuleitungsbereichen eine Zwischenwand (7) vorgesehen ist, die im Bereich nahe der Zerstäuberdüsenöffnung (5) Öffnungen (9) aufweist, durch die die Flüssigkeit verwirbelt in den Zuleitungsbereich (6) des Brennstoffes eintritt und dort vor Austritt durch die Zerstäuberdüsenöffnung (5) mit dem Brennstoff vermischt.

6. Vorrichtung nach Anspruch 5, dadurch gekennzeichnet, daß die Öffnungen (9) derart in die Zwischenwand (7) eingearbeitet sind, daß die Öffnungskontur sowie die relative Anordnung der Öffnungen (9) eine im Zuleitungsbereich (6) des Brennstoffes um die Düsenachse rotierende Strömung induzieren.

7. Vorrichtung nach Anspruch 5 oder 6, dadurch gekennzeichnet, daß zwei Öffnungen (9) in der Zwischenwand (7) gegenüberliegend eingearbeitet sind und parallel zueinander verlaufende Öffnungswände aufweisen.

8. Vorrichtung nach Anspruch 4, dadurch gekennzeichnet, daß axial zur Zerstäuberdüsenöffnung (5) der Zuleitungsbereich (6) für den Brennstoff vorgesehen ist, der koaxial von einem Zuleitungsbereich (8) für die Flüssigkeit umgeben ist, daß beabstandet von der Düsenöffnung (5) im Zuleitungsbereich (8) der Flüssigkeit wenigstens ein wirbelbildendes Element (10) vorgesehen ist, und daß vor Austritt aus der Düsenöffnung (5) der mit Wirbeln versetzte Flüssigkeitsstrom den auf die Düsenöffnung (5) gerichteten Brennstoffstrom umschließt und sich mit diesem mischt.

9. Vorrichtung nach Anspruch 8, dadurch gekennzeichnet, daß das wirbelbildende Element (10) die Flüssigkeit mit einem Drall versetzt, so daß die Flüssigkeitströmung korkenzieherartig um den Zuleitungsbereich (6) für den Brennstoff fließt.

10. Vorrichtung nach Anspruch 8 oder 9, dadurch gekennzeichnet, daß das wirbelbildende Element (10) ein entsprechend geformtes Umlenkblech ist.

11. Vorrichtung nach Anspruch 4, dadurch gekennzeichnet, daß wenigstens ein Zuleitungsbereich (8) für die Flüssigkeit derart in den Volumenbereich (11), in dem die Mischung von Flüssigkeit und Brennstoff stattfindet, einmündet, so daß die Flüssigkeit mit dem Brennstoff verwirbelt wird.

12. Vorrichtung nach Anspruch 11, dadurch gekennzeichnet, daß der Zuleitungsbereich (8) für die Flüssigkeit tangential zur Innenwand des Volumenbereiches (11) einmündet, so daß der Flüssigkeitseintritt in den Volumenbereich (11) weitgehend senkrecht zur Brennstoffströmungsrichtung erfolgt.

13. Vorrichtung nach Anspruch 11 oder 12, dadurch gekennzeichnet, daß weitere Zuleitungsbereiche für die Flüssigkeit in den Volumenbereich (11) münden, durch die der Flüssigkeitsanteil im Brennstoff-Flüssigkeitsgemisch regelbar ist.

14. Vorrichtung nach einem der Ansprüche 4 bis 13, dadurch gekennzeichnet, daß im Anschluß an die Brennkammer (2) der Einlaßbereich der Hochdruckstufe einer Gasturbine vorgesehen ist.

15. Verwendung der Vorrichtung zum Betreiben einer Gasturbine bei der durch gezielte Einstellung des Flüssigkeitsanteil sowie der Wirbelstärke der Flüssigkeit ein vorgebbarer Zündzeitpunkt, d.h. Zeitspanne zwischen Austreten des Brennstoff-Flüssigkeitsgemisch aus der Düsenöffnung und Zündereignis, eingestellt wird.
